# FASCICULE DE BREVET EUROPEEN

(11) **EP 3 430 238 B1**
(45) Date de publication et mention de la délivrance du brevet: **08.01.2020**
(21) Numéro de dépôt: 17716567.7
(22) Date de dépôt: 16.03.2017
(51) Int. Cl.: F01D 5/08

(54) **ROTOR DE TURBINE COMPRENANT UNE ENTRETOISE DE VENTILATION**
TURBINENROTOR MIT EINEM BELÜFTUNGSABSTANDSHALTER
TURBINE ROTOR COMPRISING A VENTILATION SPACER

(30) Priorité: 16.03.2016 FR 1652234
(43) Date de publication de la demande: 23.01.2019
(73) Titulaire: Safran Aircraft Engines, 75015 Paris (FR)
(72) Inventeur: OUDIN, Benjamin, Cyrille, Jacques, 77550 Moissy-Crayamel (FR); CASALIGGI, Pascal, 77550 Moissy-Crayamel (FR); CAPOLUNGO, Thierry, Laurent, 77550 Moissy-Crayamel (FR); PASQUIET, Didier, Désiré, René, 77550 Moissy-Crayamel (FR)
(74) Mandataire: Regimbeau
(86) Numéro de dépôt international: PCT/FR2017/050614
(87) Numéro de publication internationale: WO 2017/158304

(56) Documents cités:
- EP-A2- 1 091 089
- EP-A2- 1 921 255
- WO-A1-2005/052321
- FR-A1- 2 978 793

## Description

### DOMAINE DE L'INVENTION

L'invention concerne de manière générale les moteurs à turbine à gaz, et plus particulièrement la ventilation des étages d'une turbine, par exemple une turbine basse pression d'une turbomachine. Des domaines d'application de l'invention sont les turboréacteurs et turbopropulseurs d'avions et les turbines à gaz industrielles.

### ARRIERE-PLAN TECHNOLOGIQUE

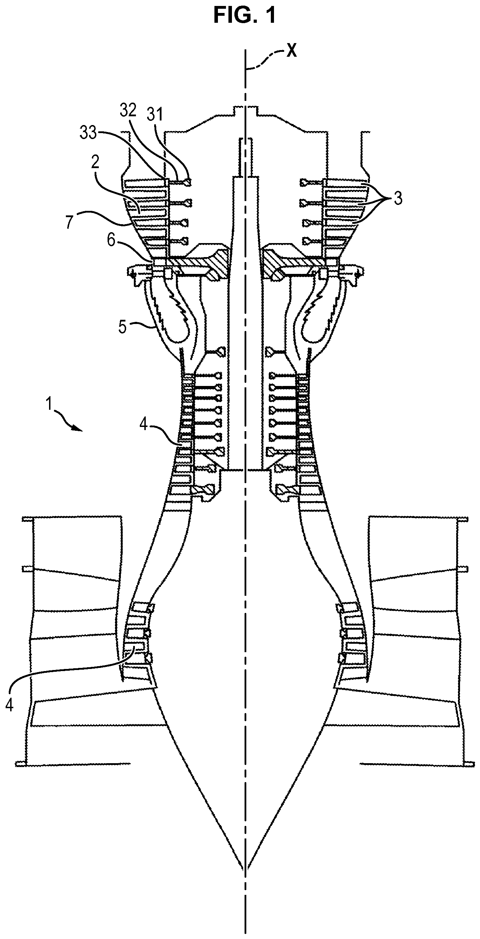

Un exemple de turbomachine a été illustré en figure 1.

Une turbomachine 1 comporte typiquement une nacelle qui forme une ouverture pour l'admission d'un flux déterminé d'air vers le moteur proprement dit. Conventionnellement, les gaz s'écoulent d'amont en aval à travers la turbomachine.

Généralement, la turbomachine comprend une ou plusieurs sections de compression 4 de l'air admis dans le moteur (généralement une section basse pression et une section haute pression). L'air ainsi comprimé est admis dans la chambre de combustion 5 et mélangé avec du carburant avant d'y être brûlé.

Les gaz de combustion chauds issus de cette combustion sont ensuite détendus dans différents étages de turbine. Une première détente est faite dans un étage à haute pression 6 immédiatement en aval de la chambre de combustion 5 et qui reçoit les gaz à la température la plus élevée. Les gaz sont détendus à nouveau en étant guidés à travers les étages de turbine dits à basse pression 7.

Une turbine, basse pression 7 ou haute pression 6 comporte classiquement un ou plusieurs étages, chacun étant constitué d'une rangée de pales de turbine fixes, aussi appelée distributeurs, suivie d'une rangée d'aubes mobiles de turbine, qui forment le rotor 3. Le distributeur 2 dévie le flux de gaz prélevé au niveau de la chambre de combustion 5 vers les aubes mobiles de turbine à un angle et une vitesse appropriés afin d'entraîner en rotation ces aubes mobiles et le rotor de la turbine.

Le rotor comprend plusieurs disques, par exemple quatre disques, qui comprennent généralement des rainures périphériques telles que des alvéoles dans lesquelles les aubes mobiles sont emboîtées.

Le rotor de la turbine est soumis à un environnement thermique très chaud, bien supérieur aux températures maximales admissibles par les pièces du rotor.

C'est pourquoi, le rotor comprend généralement un anneau d'étanchéité tournant à léchettes fixé sur le moyeu de chaque disque en regard duquel est placée une partie statique présentant un alésage comportant un matériau abradable capable de résister à des températures élevées, afin de réduire les échanges convectifs entre le flux d'air chaud en provenance de la veine d'air et le rotor.

Une ventilation spécifique pour les disques du rotor a en outre été mise en place, comprenant un flux d'air pressurisé prélevé en amont de la turbine, typiquement au niveau du compresseur haute pression 4, qui est introduit dans le rotor en vue de refroidir ses disques, en particulier ses alvéoles.

A cet effet, des lunules (ou rainures radiales) sont formées circonférentiellement sur une face aval de la bride radiale de l'anneau d'étanchéité, afin d'amener le flux d'air pressurisé aux alvéoles à travers la cavité délimitée par le moyeu du disque aval et l'anneau d'étanchéité. Ces lunules, qui sont des dépressions s'étendant sensiblement radialement par rapport à l'axe X de la turbomachine, sont souvent usinées dans la masse de l'anneau d'étanchéité. En variante, elles peuvent être usinées directement dans la masse du disque. Il s'avère cependant que leur réalisation est fastidieuse et ne peut pas être contrôlée avec précision, de sorte qu'il est nécessaire de les surdimensionner afin de garantir une section minimum pour ventiler les fonds d'alvéoles.

Dans la pratique, on constate en effet une très forte dispersion de la section calibrante, c'est-à-dire la section minimale des lunules nécessaire pour ventiler suffisamment les alvéoles, due à la géométrie des lunules et à leur réalisation complexe. Cette dispersion peut en effet atteindre 40% entre la section minimale admissible et la section obtenue pour les lunules. Il n'existe en outre pas à ce jour de moyen de contrôle simple et fiable permettant de vérifier que la section des lunules est suffisante pour ventiler correctement les disques.

Il est donc habituel de surdimensionner la section des lunules en augmentant la section nominale des lunules afin de garantir une ventilation suffisante des disques. Toutefois, la quantité d'air pressurisé prélevé en amont de la turbine est alors beaucoup plus importante que nécessaire, ce qui réduit fortement les performances de la turbomachine.

Il a donc été proposé dans le document FR 3 019 584 au nom de la Demanderesse, un système de ventilation comprenant des orifices traversants, formés au niveau de la connexion de deux disques adjacents. La section dimensionnante de ce système de ventilation correspond alors à celle des orifices traversants, qui sont plus faciles et précis à réaliser que des lunules. Ce système de ventilation permet ainsi de garantir une ventilation suffisante pour les disques tout en limitant le flux d'air prélevé pour cette ventilation, améliorant ainsi les performances de la turbomachine.

Le document EP 1 091 089 décrit un rotor conforme au préambule de la revendication 1.

Toutefois, à l'usage, il s'avère que ces usinages génèrent des contraintes très élevées dans les disques en raison des fortes sollicitations centrifuges et thermiques qui sont susceptibles de limiter la durée de vie de ces pièces qui sont critiques car nécessaires au bon fonctionnement de la turbomachine.

### RESUME DE L'INVENTION

Un objectif de l'invention est donc de proposer un système de ventilation du rotor d'un un élément tel qu'une turbine basse pression d'une machine, qui ne réduise pas la durée de vie du rotor et ne l'affaiblisse pas tout en garantissant une ventilation suffisante de ces disques et en limitant le flux d'air prélevé pour cette ventilation.

Pour cela, l'invention propose un rotor d'organe d'une turbomachine, par exemple un rotor d'une turbine, ledit rotor comprenant :
- un premier élément,
- un deuxième élément, définissant avec le premier élément une cavité de ventilation, et
- une entretoise, rapportée et fixée entre le premier élément et le deuxième élément et comprenant une série de passages traversants configurés pour permettre une injection de fluide de refroidissement dans la cavité de ventilation.

L'entretoise comprend un bord radialement externe débouchant dans la cavité de ventilation et un bord radialement interne débouchant au niveau du premier élément, à distance de la cavité de ventilation. Chaque passage comprend un orifice traversant formé dans l'entretoise et débouchant au niveau du premier élément à distance de la cavité de ventilation. Une rainure s'étend entre l'orifice traversant et le bord radialement externe, une section de l'orifice traversant étant plus grande qu'une section de la rainure.

Certaines caractéristiques préférées mais non limitatives du rotor décrit ci-dessus sont les suivantes, prises individuellement ou en combinaison :
- l'entretoise est annulaire, et dans lequel ladite entretoise est rapportée et fixée entre une bride radiale interne et le premier élément,
- l'entretoise est discontinue et comporte plusieurs sous-parties fixées entre la bride radiale interne et le premier élément, les passages étant obtenus en laissant un espace entre deux sous-parties adjacentes,
- le premier élément comprend un disque annulaire comprenant un moyeu et une jante, ladite jante étant configurée pour recevoir des aubes de l'organe,
- le deuxième élément comprend un anneau d'étanchéité comprenant une bride radiale interne fixée sur le moyeu et une bride radiale externe en contact avec la jante, l'anneau d'étanchéité définissant avec le disque la cavité de ventilation de la jante,
- l'orifice traversant de chaque passage débouche au niveau du moyeu, à distance de la cavité de ventilation,
- le bord radialement interne débouche au niveau du moyeu,
- la rainure est traversante,
- une série de lunules sont formées dans le deuxième élément et l'entretoise est fixée entre le premier élément et le deuxième élément de sorte que les passages viennent en regard desdites lunules,
- une série de lunules sont formées dans la bride radiale interne de l'anneau d'étanchéité et l'entretoise est fixée entre le moyeu et la bride radiale interne de sorte que les passages viennent en regard desdites lunules,
- la bride radiale interne de l'anneau d'étanchéité est coudée et comprend une partie axiale adjacente à la bride radiale externe, l'entretoise est coudée et comprend un épaulement conformé pour venir en regard de la partie axiale de la bride radiale interne, et la rainure des passages s'étendant jusqu'à l'épaulement de l'entretoise, et/ou
- la bride radiale interne comprend une série de languettes et est fixée sur le moyeu par l'intermédiaire desdites languettes, et dans lequel l'entretoise est fixée sur la bride radiale interne de sorte que les passages s'étendent entre deux languettes adjacentes.

Selon un deuxième aspect, l'invention propose également une turbine, notamment une turbine basse pression d'une turbomachine, comprenant un rotor comme décrit ci-dessus.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 représente un exemple de turbomachine sur lequel s'applique l'invention,
La figure 2 est une vue en coupe d'un disque d'un premier exemple de réalisation d'un rotor conforme à l'invention,
La figure 3 est une vue en coupe d'un disque d'un deuxième exemple de réalisation d'un rotor conforme à l'invention,
La figure 4 est une vue en perspective d'un exemple de réalisation d'une entretoise sur 360° pouvant être utilisée dans le rotor de la figure 3,
La figure 5a est une vue partielle en perspective de l'entretoise de la figure 4, positionnée sur un exemple d'anneau d'étanchéité, vue depuis la face aval de l'entretoise,
La figure 5b est une vue depuis la face amont de l'ensemble de la figure 5a, et
La figure 6 est une vue en perspective d'un autre exemple de réalisation d'une entretoise en secteur d'angle inférieur à 360°, positionnée sur un exemple d'anneau d'étanchéité.

### DESCRIPTION DETAILLEE D'UN MODE DE REALISATION

L'invention va être décrite tout particulièrement en référence à une turbine basse pression 7, comprenant une série de distributeurs 2 (ou stators) alternés selon l'axe X de rotation de la turbomachine 1 avec une série de disques 30 mobiles 3 d'un rotor 3. Ceci n'est cependant pas limitatif, dans la mesure où la turbine 7 pourrait comprendre un nombre d'étages différent, et que l'invention trouve aussi bien application dans tout rotor d'un organe d'un turboréacteur comprenant un premier élément et un deuxième élément définissant avec le premier élément une cavité de ventilation, tel qu'un rotor d'une turbine haute pression 6 pouvant être mono- ou multi-étages ou encore d'un compresseur haute pression ou basse pression.

La turbine 7 comporte classiquement un ou plusieurs étages (voir figure 1), chacun étant constitué d'un distributeur 2 suivi d'un rotor 3 (ou roue mobile).

Le rotor 3 présente un axe X de révolution qui correspond à un axe principal de la turbomachine 1 et comprend plusieurs disques 30, par exemple quatre disques 30, qui comprennent chacun un moyeu 31 s'étendant radialement vers l'intérieur en direction de l'axe X. Des rainures périphériques telles que des alvéoles 32, dans lesquelles les aubes mobiles 34 sont emboîtées, sont formées dans une jante 33 des moyeux 31.

Les différents disques 30 du rotor 3 peuvent notamment être assemblés de manière coaxiale par boulonnage. Chaque disque 30 de rotor 3 peut être relié à un disque 30 adjacent par l'intermédiaire d'une virole 36.

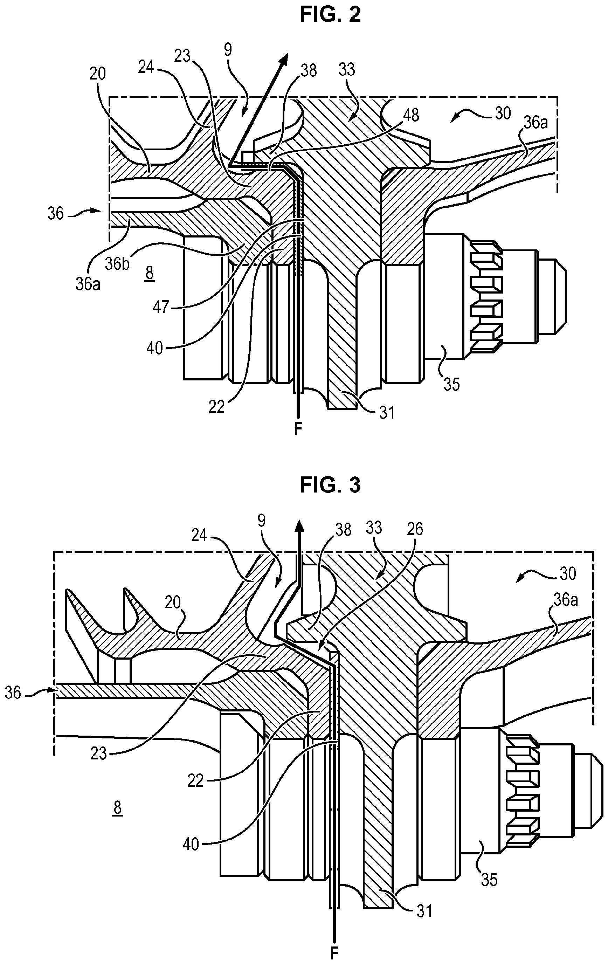

Par exemple, comme indiqué sur les figures 2 et 3, le deuxième et le troisième disque 30 (suivant le sens d'écoulement des gaz dans la turbomachine) comportent chacun une virole 36 qui s'étend depuis sa face radiale aval et qui est fixée sur le disque 30 immédiatement en aval (c'est à dire le troisième et le quatrième disque 30, respectivement). Cette virole 36 délimite ainsi une cavité radialement interne 8 avec le moyeu 31 immédiatement en aval. La virole 36 peut notamment être fixée par boulonnage.

Dans ce qui suit, l'invention sera décrite en relation avec le deuxième et le troisième disque 30 de la turbine 7. Toutefois, l'invention s'applique à tous les disques 30 d'une turbine 7, et plus particulièrement aux disques 30 compris entre le deuxième disque 30 et le dernier disque 30 de la turbine 7 dans la mesure où ces disques 30 sont tous connectés au disque 30 immédiatement en amont par l'intermédiaire de la virole 36 de ce disque 30 amont.

Un anneau d'étanchéité 20 annulaire assurant l'étanchéité du passage du flux d'air de refroidissement F des jantes 33 des disques 30 est en outre fixé sur chaque disque. Dans un mode de réalisation, l'anneau d'étanchéité 20 peut également assurer une étanchéité entre l'aval de l'aube mobile et l'amont de l'aube fixe immédiatement en amont. A cet effet, pour un disque 30 donné, l'anneau d'étanchéité 20 comprend une bride radiale interne 22 fixée sur le moyeu 31 du disque 30 et une bride radiale externe 24 en contact avec la jante 33 de ce disque 30. La bride radiale interne 22 et la bride radiale externe 24 de l'anneau d'étanchéité 20 définissent ainsi avec ce disque 30 une cavité de ventilation 9 de la jante 33 du disque 30.

L'anneau d'étanchéité 20 peut comprendre de manière conventionnelle des léchettes.

Dans l'exemple de réalisation illustré sur les figures, la bride radiale interne 22 de l'anneau d'étanchéité 20 du troisième disque 30 est fixée entre la virole 36 du deuxième disque 30 et le moyeu 31 du troisième disque 30.

Dans une forme de réalisation, la virole 36 du deuxième disque 30 peut comprendre une partie sensiblement axiale 36a par rapport à l'axe X, qui s'étend vers le troisième disque 30 et délimite la cavité interne 8, et une partie radiale 36b par rapport à l'axe X qui correspond à l'extrémité libre de la virole 36 et qui est fixée sur le moyeu 31 du troisième disque 30.

Afin de ventiler la jante 33 des disques 30 du rotor 3, un flux d'air pressurisé F peut être prélevé en amont de la turbine 7, typiquement au niveau du compresseur haute pression 4 de la turbomachine 1, et être introduit dans les alvéoles 32 de leur jante 33 afin de refroidir les disques 30. Pour cela, le rotor 3 comprend un système de ventilation pour chaque disque 30, adapté pour mettre en communication fluidique la cavité radialement interne 8 et la cavité de ventilation 9.

A cet effet, le rotor 3 comprend une entretoise 40 annulaire, rapportée et fixée entre la bride radiale interne 22 de l'anneau d'étanchéité 20 et le moyeu 31 du disque 30 qui comprend une série de passages 42 traversants axialement configurés pour permettre une injection de fluide de refroidissement F dans la cavité de ventilation 9 à partir de la cavité radialement interne 8.

Les passages 42 s'étendent sensiblement au moins en partie radialement par rapport à l'axe X depuis une zone radialement interne (adjacente à l'axe X) vers une zone radialement externe (qui est adjacente à la jante 33, lorsque le premier élément comprend un moyeu 30) de l'entretoise annulaire 40. Les passages 52 forment donc des canaux de circulation du fluide de refroidissement F de la cavité radialement interne 8 vers la cavité de ventilation 9. En effet, la fixation de l'anneau d'étanchéité 20 sur le premier élément, ici le moyeu 31, est étanche, de sorte que le flux d'air pressurisé F ne peut qu'emprunter les canaux de circulation ainsi formés.

La fixation d'une entretoise 40 rapportée permet ainsi de calibrer avec précision la quantité de fluide de refroidissement F (air pressurisé) introduite dans la cavité de ventilation 9, les passages 42 pouvant être réalisés, par exemple par usinage, lors d'une étape distincte de la réalisation des disques 30 et sans avoir à usiner les disques 30 (ou l'anneau d'étanchéité 20). Les passages 42 ne constituent donc plus des zones de faiblesse des disques 30, ce qui permet d'augmenter leur durée de vie, tout en assurant leur bon refroidissement.

La mise en œuvre d'une telle entretoise 40 permet en outre de réduire de façon importante le coût de fabrication du rotor 3 dans la mesure où elle permet de limiter, voire de supprimer, les nécessaire pour ventiler la jante 33 et dont le contrôle était particulièrement coûteux. De plus, l'entretoise 40 est facile à réaliser et pour un moindre coût. Enfin, de manière optionnelle, l'entretoise 40 permet d'ajuster la section du flux de ventilation au niveau de chaque passage 42.

L'entretoise 40 peut par exemple être fixée par boulonnage (système de vis et d'écrou 35) sur le moyeu 31 et la bride radiale interne 22, par l'intermédiaire de trous de fixation 22c formés dans ladite bride radiale interne 22. Ce mode de fixation peut être avantageux notamment lorsque la bride radiale interne 22 est elle-même fixée sur le moyeu 31 par boulonnage, auquel cas il suffit d'interposer l'entretoise 40 entre la bride radiale interne 22 et le moyeu 31.

En variante, l'entretoise 40 peut être fixée par frettage, vissage, serrage, etc.

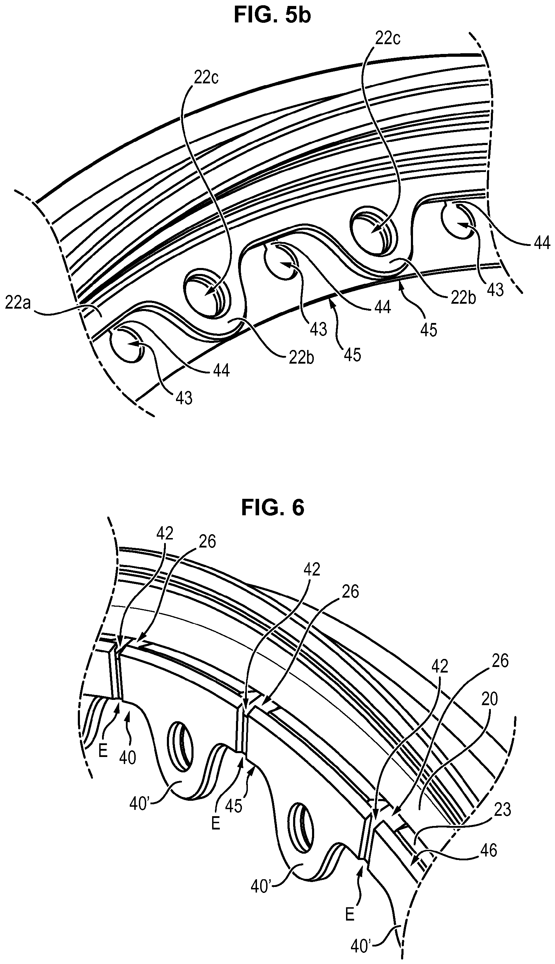

Comme illustré sur la figure 6, dans un premier mode de réalisation l'entretoise 40 peut être discontinue et comprendre plusieurs sous-parties 40' qui sont fixées individuellement entre la bride radiale interne 22 de l'anneau d'étanchéité 20 et le moyeu 31, typiquement au niveau de chaque boulonnage. Dans ce cas, les sous-parties 40' sont fixées de manière à ménager un espace E entre deux sous-parties 40' adjacentes, lesdits espaces E définissant les passages 42 pour l'injection du fluide de refroidissement F depuis la cavité radialement interne 8 dans la cavité de ventilation 9. Les sous-parties 40' peuvent être de forme et de taille identique, ou en variante être distinctes afin d'ajuster au cas par cas les débits de ventilation souhaités.

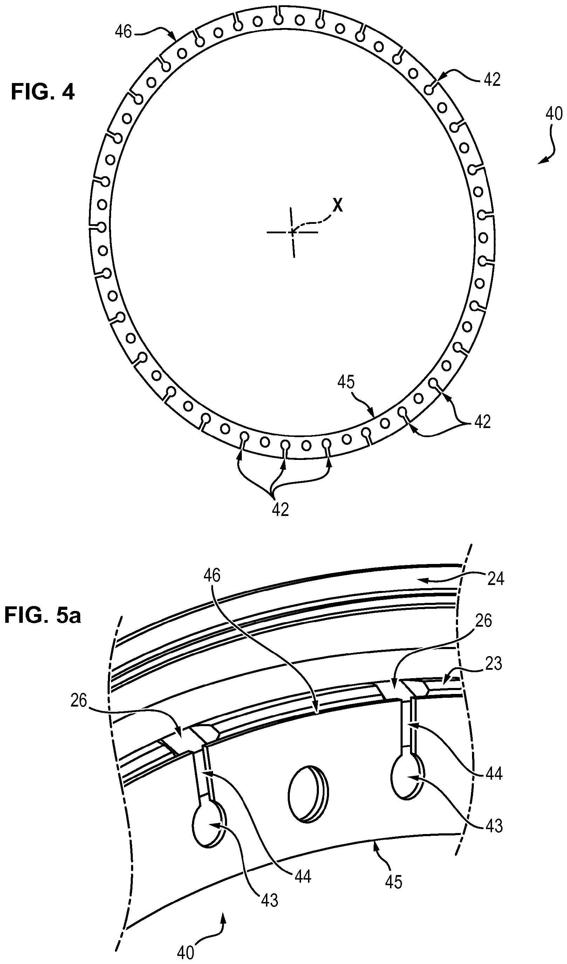

En variante, dans un deuxième mode de réalisation illustré en figure 4, l'entretoise 40 peut être continue, c'est-à-dire monobloc et, le cas échéant, formée d'un seul tenant (comme illustré notamment sur les figures 4, 5a et 5b). Dans ce cas, les passages 42 sont formés dans l'entretoise 40, par exemple par usinage, perçage, etc.

Chaque passage 42 peut comprendre, comme illustré en figure 5a, un orifice traversant axialement 43, formé dans l'entretoise 40 et débouchant dans la cavité interne 8, c'est-à-dire au niveau du moyeu 31 et à distance (radialement vers l'axe X du rotor) de la cavité de ventilation 9, et une rainure 44, s'étendant sensiblement radialement par rapport à l'axe X depuis l'orifice 43 et débouchant dans la cavité de ventilation 9.

Plus précisément, l'entretoise 40 comprend un bord radialement externe 46 débouchant dans la cavité de ventilation 9 et un bord radialement interne 45 débouchant dans la cavité interne 8, au niveau du moyeu 31. Les orifices traversants 43 sont alors formés à distance des deux bords 45, 46, tandis que la rainure 44 est formée entre l'orifice 43 et le bord radialement externe 46.

La section de la rainure 44 est choisie de manière à permettre une ventilation suffisante des disques 30 du rotor 3 en prélevant un minimum de flux d'air en amont de la turbine 7 afin de ne pas pénaliser le rendement de la turbomachine. En conséquence, c'est la section des rainures 44 qui est dimensionnante (calibrante). La section des orifices 43 est simplement choisie de manière à être plus grande que la section des rainures 44, afin d'assurer un prélèvement suffisant de fluide de refroidissement F dans la cavité interne 8. Par ailleurs, de manière optionnelle, la section peut également être choisie afin de rester inférieure à la section des trous de la bride radiale interne 22 en regard afin de limiter les risques d'erreur lors du montage des vis dans les trous. Ainsi, un orifice 43 dont la section est inférieure peut servir de détrompeur. Les orifices 43 permettent en outre de réduire les contraintes. En effet, ces orifices 43 correspondent à des trous de décharges. De par leur rayon, ils permettent en outre de réduire les contraintes mécaniques tangentielles (prépondérantes dans une pièce tournante) qui circulent dans l'entretoise 40 en déviant le flux de contraintes de façon progressive. En effet, dans le cas d'un cassage d'arrêté sec, le flux est dévié très rapidement, ce qui génère des contraintes mécaniques importantes, néfastes pour la durée de vie de la pièce. On notera que de telles formes sont présentes notamment dans le mode de réalisation de la figure 4, dans lequel l'entretoise 40 est une pièce continue et monobloc sur 360°. Ces orifices 43 ne sont en revanche pas nécessaires si l'entretoise 40 est conforme au mode de réalisation illustré en figure 6.

La section des rainures 44 est choisie en fonction de l'étage du disque 30 correspondant (deuxième disque 30, troisième disque 30, etc.), de la température de la turbine 7, du débit de la veine d'air à travers la turbomachine, etc. Ce choix faisant partie du travail habituel de l'homme du métier, il ne sera pas détaillé davantage ici.

La section transversale des rainures 44 peut être rectangulaire. Une telle section est en effet aisée à réaliser en comparaison avec des lunules qui présentent des rayons difficilement usinables et reproductibles. Par ailleurs, la rainure 44 peut comprendre une gorge uniquement (rainure 44 simple) ou être composée de plusieurs gorges, parallèles ou non (rainure 44 multiple).

Les orifices traversants 43 peuvent être de section transversale circulaire. Il s'avère en effet très facile de nos jours de contrôler la section d'un orifice lorsque celui-ci est circulaire, dans la mesure où il suffit de déterminer son diamètre.

Ceci n'est cependant pas limitatif, les rainures 44 et les orifices traversants 43 pouvant présenter une section différente (triangulaire, ovale, ou toute autre forme de section).

La rainure 44 peut être traversante ou en variante être borgne.

De manière optionnelle, la bride radiale interne 22 de l'anneau d'étanchéité 20 peut comprendre une bande 22a (figure 5b) sensiblement annulaire de laquelle s'étendent une série de languettes 22b ou oreilles servant à la fixation de l'anneau d'étanchéité 20 sur le moyeu 31. La bande 22a et les languettes 22b sont, dans une mode de réalisation, monobloc et d'un seul tenant. L'anneau d'étanchéité 20 peut être boulonné sur le moyeu 31, auquel cas chaque languette 22b comprend un trou 22c traversant configuré pour recevoir une tige de ce système de fixation.

L'entretoise 40 peut alors être fixée sur le disque 30, entre la bride radiale interne 22 et le moyeu 31, de sorte que chaque orifice 43 d'un passage 42 se trouve entre deux languettes 22b adjacentes. Dans cet exemple de réalisation, les orifices 43 des passages 42 débouchent donc des deux côtés dans la cavité interne 8.

Dans l'exemple de réalisation illustré sur les figures, l'anneau d'étanchéité 20 comprend, entre la bride radiale externe 24 et la bride radiale interne 22, une bride 23 sensiblement axiale, qui forme un coude avec la bride radiale interne 22. Le moyeu 31 comprend par ailleurs, au niveau de cette bride axiale 23, une saillie annulaire 38 qui vient en regard (figure 2) et en appui contre (figure 3) ladite bride axiale 23.

Dans ce cas, l'entretoise 40 comprend également une portion coudée 48 dont la forme et les dimensions correspondent respectivement à la forme et aux dimensions du coude de l'anneau d'étanchéité 20, de manière à épouser la forme de la bride radiale interne 22 et de la bride axiale 23 et de recouvrir au moins partiellement la bride axiale 23. Cette configuration permet ainsi l'introduction du fluide de refroidissement F dans la cavité de ventilation 9 malgré la présence de la saillie annulaire 38 du moyeu 31 (voir figures 2 et 3). A cet effet, l'entretoise 40 peut comprendre une plaque annulaire 47, fixée le long de la bride radiale interne 22, et un épaulement 48 s'étendant depuis la plaque annulaire 47 de manière à venir en regard de la bride axiale 23. Le bord radialement externe 46 de l'entretoise 40 correspond alors au bord de l'épaulement 48 et s'étend face à la surface radialement externe de la bride axiale 23 de sorte que le passage 42 débouche bien dans la cavité de ventilation 9. Ainsi, dans le cas où le passage 42 comprend une rainure 44, ladite rainure 44 peut être formée dans la plaque annulaire 47 et dans l'épaulement 48 de l'entretoise 40 et s'étendre le cas échéant jusqu'à son bord 46.

De manière optionnelle, des lunules 26 (figures 3 et 5a), participant à l'injection de fluide de refroidissement F dans la cavité de ventilation 9, peuvent également être formées dans l'anneau d'étanchéité 20, plus précisément dans une partie de l'anneau d'étanchéité 20 qui fait face à l'entretoise 40.

Ces lunules 26 peuvent alors avoir une section plus grande que la section des passages 42 de l'entretoise 40, augmentant ainsi leur tolérance de fabrication. C'est alors la section des passages 42 formés dans l'entretoise 40 qui est dimensionnante (ou calibrante) pour la quantité de fluide de refroidissement F injectée dans la cavité de ventilation 9, via les lunules 26. La section transversale des lunules 26 peut donc être choisie de manière à être plus grande que la section transversale des passages 42, afin d'amener le flux d'air pressurisé F des passages 42 jusqu'à la cavité de ventilation 9.

Les lunules 26 sont formées dans la face aval de la bride radiale interne 22 (figure 5a).

Lorsque l'anneau d'étanchéité 20 comprend une bride axiale 23, les lunules 26 peuvent également être formées dans la bride axiale 23 afin de déboucher dans la cavité de ventilation 9 et de permettre le passage 42 du fluide de refroidissement F.

Dans ce cas, l'entretoise 40 peut soit s'étendre uniquement le long de la bride radiale interne 22 et être sensiblement plane, soit comprendre une portion coudée (épaulement 48) de forme correspondant à la forme du coude de l'anneau d'étanchéité 20.

Les lunules 26 peuvent être obtenues par fraisage dans la masse de la bride radiale interne 22 (et le cas échéant de la bride axiale 23).

L'entretoise 40 peut comprendre une butée anti-rotation, configurée pour empêcher l'entretoise 40 (ou les sous-parties 40' d'entretoise 40) de tourner lors du fonctionnement du rotor 3. Par exemple, dans le cas où l'entretoise 40 comprend un épaulement 48, ledit épaulement 48 permet de limiter les débattements radiaux de l'entretoise 40 et former ainsi une butée anti-rotation.

Optionnellement, l'entretoise 40 peut présenter l'une ou plusieurs des caractéristiques suivantes :
- Des usinages supplémentaires peuvent être formés dans l'entretoise 40 afin de respecter des objectifs de gain de masse.
- Des festons ou toute autre forme configurée pour réduire des contraintes au sein de l'entretoise 40 peuvent être formés avec l'entretoise 40,
- Les passages 42 peuvent présenter, au sein d'une même entretoise 40, des sections différentes afin de modifier la quantité d'air injectée dans la cavité de ventilation 9 suivant leur position angulaire autour de l'axe X du rotor 3. Une telle configuration peut s'avérer intéressante par exemple lorsque la répartition des boulons de fixation de l'anneau d'étanchéité 20 sur le moyeu 31 est hétérogène ou si les spécifications de ventilation du rotor 3 changent.
- L'entretoise 40 peut être à étages multiples, c'est-à-dire comprendre plusieurs plaques placées l'une contre l'autre de manière à se chevaucher.
- L'entretoise 40 peut être fine et présenter une épaisseur de l'ordre de 1 mm lorsqu'elle est réalisée dans un matériau de type super alliage à base de nickel. Elle est donc facile à insérer entre la bride radiale et le moyeu 31, peu encombrante et ne pénalise pas la masse globale du rotor 3.

On notera que l'entretoise de ventilation 40 de l'invention peut être appliquée à d'autres pièces d'une turbomachine nécessitant une ventilation calibrée, et n'est pas limitée à son application à un rotor d'une turbine.

## Revendications

1. Rotor (3) d'un organe (7) d'une turbomachine (1), par exemple rotor d'une turbine (7), ledit rotor (3) comprenant :
- un premier élément (30),
- un deuxième élément (20), définissant avec le premier élément une cavité de ventilation (9), et
- une entretoise (40), rapportée et fixée entre le premier élément (30) et le deuxième élément (20) et comprenant une série de passages (42) traversants configurés pour permettre une injection de fluide de refroidissement (F) dans la cavité de ventilation (9), ladite entretoise (40) comprenant un bord radialement externe (46) débouchant dans la cavité de ventilation (9) et un bord radialement interne (45) débouchant au niveau du premier élément (30), à distance de la cavité de ventilation (9),
le rotor (3) étant **caractérisé en ce que** chaque passage (42) comprend un orifice traversant (43) formé dans l'entretoise (40) et débouchant au niveau du premier élément à distance de la cavité de ventilation (9), et une rainure (44) s'étendant entre l'orifice traversant (43) et le bord radialement externe (46), une section de l'orifice traversant (43) étant plus grande qu'une section de la rainure (44).

2. Rotor selon la revendication 1, dans lequel l'entretoise (40) est annulaire, et dans lequel ladite entretoise (40) est rapportée et fixée entre une bride radiale interne (22) et le premier élément (30).

3. Rotor (3) selon la revendication 1 ou 2, dans lequel l'entretoise (40) est discontinue et comporte plusieurs sous-parties (40') fixées entre la bride radiale interne (22) et le premier élément (30), les passages (42) étant obtenus en laissant un espace (E) entre deux sous-parties (40') adjacentes.

4. Rotor (3) selon l'une des revendications 1 à 3, dans lequel le premier élément (30) comprend un disque (30) annulaire comprenant un moyeu (31) et une jante (33), ladite jante (33) étant configurée pour recevoir des aubes (34) de l'organe.

5. Rotor selon la revendication 4, dans lequel le deuxième élément (20) comprend un anneau d'étanchéité (20) comprenant une bride radiale interne (22) fixée sur le moyeu (31) et une bride radiale externe (24) en contact avec la jante (33), l'anneau d'étanchéité (20) définissant avec le disque (30) la cavité de ventilation (9) de la jante (33).

6. Rotor (3) selon l'une des revendications 4 ou 5, dans lequel l'orifice traversant (43) de chaque passage débouche au niveau du moyeu (31), à distance de la cavité de ventilation (9).

7. Rotor (3) selon la revendication 6, dans lequel le bord radialement interne (45) débouche au niveau du moyeu (31).

8. Rotor (3) selon la revendication 7, dans lequel la rainure (44) est traversante.

9. Rotor (3) selon l'une des revendications 1 à 8, dans lequel une série de lunules (26) sont formées dans le deuxième élément (20) et l'entretoise (40) est fixée entre le premier élément (30) et le deuxième élément (20) de sorte que les passages (42) viennent en regard desdites lunules (26).

10. Rotor (3) selon l'une des revendications 5 à 8, dans lequel une série de lunules (26) sont formées dans la bride radiale interne (22) de l'anneau d'étanchéité (20) et l'entretoise (40) est fixée entre le moyeu (31) et la bride radiale interne (22) de sorte que les passages (42) viennent en regard desdites lunules (26).

11. Rotor (3) selon l'une des revendications 7 à 10, dans lequel :
- la bride radiale interne (22) de l'anneau d'étanchéité (20) est coudée et comprend une partie axiale (23) adjacente à la bride radiale externe (24),
- l'entretoise (40) est coudée et comprend un épaulement (48) conformé pour venir en regard de la partie axiale (23) de la bride radiale interne (22), et
- la rainure (44) des passages (42) s'étendant jusqu'à l'épaulement (48) de l'entretoise (40).

12. Rotor (3) selon l'une des revendications 4 à 11, dans lequel la bride radiale interne (22) comprend une série de languettes (22b) et est fixée sur le moyeu (31) par l'intermédiaire desdites languettes (22b), et dans lequel l'entretoise (40) est fixée sur la bride radiale interne (22) de sorte que les passages (42) s'étendent entre deux languettes (22b) adjacentes.

13. Turbine (7), notamment une turbine (7) basse pression d'une turbomachine, comprenant un rotor (3) selon l'une des revendications 1 à 12.

## Patentansprüche

1. Rotor (3) eines Elements (7) einer Turbomaschine (1), zum Beispiel Rotor einer Turbine (7), wobei der Rotor (3) Folgendes umfasst:
- ein erstes Element (30),
- ein zweites Element (20), das mit dem ersten Element einen Lüftungshohlraum (9) definiert, und
- einen Abstandshalter (40), der zwischen dem ersten Element (30) und dem zweiten Element (20) angesetzt und befestigt ist und eine Reihe von Durchgangskanälen (42) umfasst, die so konfiguriert sind, dass sie eine Einspritzung von Kühlmittel (F) in den Lüftungshohlraum (9) ermöglichen, wobei der Abstandshalter (40) einen radial äußeren Rand (46) umfasst, der in den Lüftungshohlraum (9) führt, und einen radial inneren Rand (45), der zum ersten Element (30) in Entfernung vom Lüftungshohlraum (9) führt,
wobei der Rotor (3) **dadurch gekennzeichnet ist, dass** jeder Durchgangskanal (42) eine Durchgangsöffnung (43) umfasst, die im Abstandshalter (40) ausgebildet ist und am ersten Element in Entfernung vom Lüftungshohlraum (9) mündet, und eine Nut (44), die sich zwischen der Durchgangsöffnung (43) und dem radial äußeren Rand (46) erstreckt, wobei ein Abschnitt der Durchgangsöffnung (43) größer ist als ein Abschnitt der Nut (44).

2. Rotor nach Anspruch 1, wobei der Abstandshalter (40) ringförmig ist und wobei der Abstandshalter (40) zwischen einem inneren Radialflansch (22) und dem ersten Element (30) angesetzt und befestigt ist.

3. Rotor (3) nach Anspruch 1 oder 2, wobei der Abstandshalter (40) unterbrochen ist und mehrere Unterabschnitte (40') aufweist, die zwischen dem inneren Radialflansch (22) und dem ersten Element (30) befestigt sind, wobei die Durchgangskanäle (42) so ausgeführt werden, dass zwischen zwei anschließenden Unterabschnitten (40') ein Raum (E) gelassen wird.

4. Rotor (3) nach einem beliebigen der vorstehenden Ansprüche 1 bis 3, wobei das erste Element (30) eine Ringscheibe (30) umfasst, die eine Nabe (31) und eine Felge (33) aufweist, wobei die Felge (33) so konfiguriert ist, dass sie Schaufelblätter (34) des Elements aufnimmt.

5. Rotor nach Anspruch 4, wobei das zweite Element (20) einen Dichtungsring (20) umfasst, der einen inneren Radialflansch (22) aufweist, der auf der Nabe (31) befestigt ist und einen äußeren Radialflansch (24) in Berührung mit der Felge (33) umfasst, wobei der Dichtungsring (20) mit der Scheibe (30) den Belüftungshohlraum (9) der Felge (33) definiert.

6. Rotor (3) nach einem beliebigen der vorstehenden Ansprüche 4 oder 5, wobei die Durchgangsöffnung (43) jedes Durchgangskanals an der Nabe (31) in Entfernung vom Lüftungshohlraum (9) mündet.

7. Rotor (3) nach Anspruch 6, wobei der radiale Innenrand (45) zur Nabe (31) führt.

8. Rotor (3) nach Anspruch 7, wobei die Nut (44) durchgehend ist.

9. Rotor (3) nach einem beliebigen der vorstehenden Ansprüche 1 bis 8, wobei in dem zweiten Element (20) eine Reihe von Öffnungen (26) ausgebildet sind und der Abstandshalter (40) so zwischen dem ersten Element (30) und dem zweiten Element (20) befestigt ist, dass die Durchgangskanäle (42) den Öffnungen (26) zugewandt sind.

10. Rotor (3) nach einem beliebigen der Ansprüche 5 bis 8, wobei eine Reihe von Öffnungen (26) im inneren Radialflansch (22) des Dichtungsrings (20) ausgebildet sind und der Abstandshalter (40) so zwischen der Nabe (31) und dem inneren Radialflansch (22) befestigt ist, dass die Durchgangskanäle (42) den Öffnungen (26) zugewandt sind.

11. Rotor (3) nach einem beliebigen der vorstehenden Ansprüche 7 bis 10, wobei
- der innere Radialflansch (22) des Dichtungsrings (20) abgewinkelt ist und einen axialen Teil (23) anschließend an den äußeren Radialflansch (24) umfasst,
- der Abstandshalter (40) abgewinkelt ist und eine Schulter (48) aufweist, die so geformt ist, dass sie dem Axialteil (23) des inneren Radialflansches (22) zugewandt ist, und
- sich die Nut (44) der Durchgangskanäle (42) bis zur Schulter (48) des Abstandshalters (40) erstreckt.

12. Rotor (3) nach einem beliebigen der vorstehenden Ansprüche 4 bis 11, wobei der innere Radialflansch (22) eine Reihe von Zungenelementen (22b) umfasst und durch die Zungenelemente (22b) an der Nabe (31) befestigt ist, und wobei der Abstandshalter (40) am inneren Radialflansch (22) befestigt ist, so dass sich die Durchgangskanäle (42) zwischen zwei anschließenden Zungenelementen (22b) erstrecken.

13. Turbine (7), insbesondere Niederdruckturbine (7) einer Turbomaschine, die einen Rotor (3) nach einem beliebigen der vorstehenden Ansprüche 1 bis 12 umfasst.

## Claims

1. A rotor (3) of a member (7) of a turbomachine (1), for example a rotor of a turbine (7), said rotor (3) comprising:
- a first element (30),
- a second element (20), defining with the first element a ventilation cavity (9), and
- a spacer (40), added and fixed between the first element (30) and the second element (20) and comprising a series of through-passages (42) configured to allow an injection of cooling fluid (F) into the ventilation cavity (9), said spacer (40) comprising a radially outer edge (46) opening into the ventilation cavity (9) and a radially inner edge (45) opening at the first element (30), away from the ventilation cavity (9),
the rotor (3) being **characterized in that** each passage (42) comprises a through-hole (43) formed in the spacer (40) and opening at the first element away from the ventilation cavity (9), and a slot (44) extending between the through-hole (43) and the radially outer edge (46), a section of the through-hole (43) being larger than a section of the slot (44).

2. The rotor according to claim 1, wherein the spacer (40) is annular, and wherein said spacer (40) is added and fixed between an inner radial flange (22) and the first element (30).

3. The rotor (3) according to claim 1 or 2, wherein the spacer (40) is discontinuous and includes a plurality of sub-portions (40') fixed between the inner radial flange (22) and the first element (30), the passages (42) being obtained by leaving a space (E) between two adjacent sub-portions (40').

4. The rotor (3) according to any of claims 1 to 3, wherein the first element (30) comprises an annular disk (30) comprising a hub (31) and a rim (33), said rim (33) being configured to receive vanes (34) of the member.

5. The rotor according to claim 4, wherein the second element (20) comprises a sealing ring (20) comprising an inner radial flange (22) fixed onto the hub (31) and an outer radial flange (24) in contact with the rim (33), the sealing ring (20) defining with the disc (30) the ventilation cavity (9) of the rim (33).

6. The rotor (3) according to any of claims 4 or 5, wherein the through-hole (43) of each passage opens at the hub (31), away from the ventilation cavity (9).

7. The rotor (3) according to claim 6, wherein the radially inner edge (45) opens at the hub (31).

8. The rotor (3) according to claim 7, wherein the slot (44) is a through-slot.

9. The rotor (3) according to any of claims 1 to 8, wherein a series of crescents (26) are formed in the second element (20) and the spacer (40) is fixed between the first element (30) and the second element (20) so that the passages (42) face said crescents (26).

10. The rotor (3) according to any of claims 5 to 8, wherein a series of crescents (26) are formed in the inner radial flange (22) of the sealing ring (20) and the spacer (40) is fixed between the hub (31) and the inner radial flange (22) so that the passages (42) face said crescents (26).

11. The rotor (3) according to any of claims 7 to 10, wherein:
- the inner radial flange (22) of the sealing ring (20) is bent and comprises an axial portion (23) adjacent to the outer radial flange (24),
- the spacer (40) is bent and comprises a shoulder (48) shaped to face the axial portion (23) of the inner radial flange (22), and
- the slot (44) of the passages (42) extends up to the shoulder (48) of the spacer (40).

12. The rotor (3) according to any of claims 4 to 11, wherein the inner radial flange (22) comprises a series of tabs (22b) and is fixed onto the hub (31) via said tabs (22b), and wherein the spacer (40) is fixed onto the inner radial flange (22) so that the passages (42) extend between two adjacent tabs (22b).

13. A turbine (7), in particular a low-pressure turbine (7) of a turbomachine, comprising a rotor (3) according to any of claims 1 to 12.
